# EUROPEAN PATENT SPECIFICATION

(11) **EP 1 328 357 B1**
(45) Date of publication and mention of the grant of the patent: **18.10.2006**
(21) Application number: 00956146.5
(22) Date of filing: 01.09.2000
(51) Int. Cl.: B09B 3/00, A62D 3/00, B01D 53/48

(54) **PROCESS FOR THE TREATMENT OF BOTTOM ASH FROM WASTE INCINERATION PLANTS**
VERFAHREN ZUR BEHANDLUNG VON BODENASCHE AUS MÜLLVERBRENNUNGSANLAGEN
PROCEDE DE TRAITEMENT DES CENDRES RESIDUELLES PROVENANT D'USINES D'INCINERATION DE DECHETS

(43) Date of publication of application: 23.07.2003
(73) Proprietor: Tech-Wise A/S, 7000 Fredericia (DK)
(72) Inventor: SANDER, Bo, DK-6070 Christiansfeld (DK)
(74) Representative: Carlsen, Niels G.
(86) International application number: PCT/DK2000/000479
(87) International publication number: WO 2002/018069

(56) References cited:
- EP-A1- 0 801 971
- WO-A1-97/30757
- WO-A1-98/56464
- FR-A1- 2 792 856
- US-A- 5 719 099

## Description

### TECHNICAL FIELD

The present invention relates to a process for the releasing of sulphates from a residual product where a demand for decreasing the sulphate content exists. In particular, the invention relates to a process for the releasing of sulphates from bottom ash from waste incineration plants.

### BACKGROUND ART

Waste incineration involves production of large amounts of bottom ash. The bottom ash is removed from the bottom of the incineration furnace - often in a wet condition after a residence in a bottom ash bath.

Until now, bottom ash from waste incineration has largely been utilized as a material for building and foundation works. In Denmark, a new regulation has recently been issued, which substantially changes the conditions for the utilisation of bottom ash.

According to the former provisions, the bottom ash had to fulfill requirements relating to the total content of individual heavy metals. The new regulation states that bottom ash which is desired to be utilized must fulfill requirements relating to leaching properties. The bottom ash is slurried in water, and the liquid phase is analyzed for chloride, sulphate, sodium and a series of heavy metals. The established limits imply that the present utilisation of bottom ash cannot be maintained unless the bottom ash is given a finishing treatment by a washing process.

Chloride and sodium are readily soluble ions that may be washed out using limited amounts of water. However, the release of sulphate from the bottom ash is restricted by solubility and sulphate cannot be washed out to the required extent by using an acceptable amount of water.

### DISCLOSURE OF THE INVENTION

The object of the invention is to liberate sulphate from residual products, such as bottom ash, by using a reasonable amount of water.

It has now surprisingly been found that sulphate may be removed from residual products, such as bottom ash, by washing said products in water comprising sulphate mobilizing additives.

Accordingly, the process of the invention is characterized by washing said residual product in water with the addition of a soluble hydrogen carbonate. It should be noted that washing residual product in water with the addition of a soluble carbonate does not form part of this invention.

In bottom ash, sulphate is typically bound in minerals containing CaSO₄ and thus the solubility depends on the concentrations of the calcium ions and the sulphate ions in the liquid phase. When precipitating calcium ions from the liquid phase, sulphate ions will be released. This is carried out by the addition of readily soluble carbonate salts or hydrogen carbonate salts. These salts are typically Na₂CO₃ or NaHCO₃ but other cations forming readily soluble carbonates or hydrogen carbonates are useful, too.

When using Na₂CO₃, the equation of reaction is as follows:

CaSO₄ (s) + Na₂CO₃ (aq) → CaCO₃ (s) + Na₂SO₄ (aq)

Introduction of said sulphate mobilizing additives can take place in all types of washing plants that can be used to wash bottom ash, and can be combined with processes for stabilizing heavy metals in residual products (e.g. CO₂ or phosphoric acid treatment).

The process of the invention may also be used for treatment of other types of residual products where a demand for decreasing the sulphate content exists, such as flue gas cleaning residues.

### BRIEF DESCRIPTION OF THE DRAWINGS

The invention is described in greater detail in the experimental part below and with reference to the accompanying figures, of which
- Figure 1: is a flowsheet that shows washing of bottom ash with water with the addition of sodium carbonate, and
- Figure 2: is a graph that shows the amount of dissolved sulphate under different washing conditions.

### DETAILED DESCRIPTION OF THE INVENTION

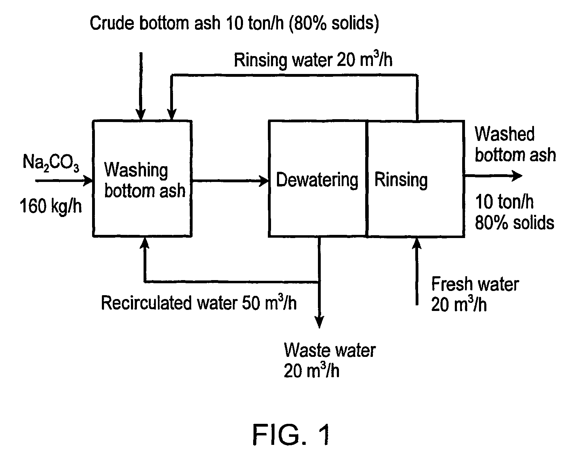

A flowsheet for washing bottom ash with the addition of sodium carbonate is shown in figure 1, which merely illustrates an example of the invention and by no way limits the scope of the invention.

The washing of the bottom ash is carried out in an agitated reactor with a solids content of 10%. Before feeding the bottom ash into the reactor, scrap iron and other large parts must be separated. The water consumption to 2 m³ per ton crude bottom ash and therefore, washing water from the dewatering unit has to be recirculated. The washed bottom ash has to be rinsed with fresh water to displace the salt charged process water from the bottom ash. A stoichiometric molar ratio of carbonate to sulphate of 1.5 is assumed.

Assuming a content of soluble salts in the bottom ash of 4 g chloride/kg, 12 g sulphate/kg, and 4 g sodium/kg, respectively, on the basis of dry matter, the waste water from the process will comprise 1.6 g chloride/l, 4.8 g sulphate/l, and 5.1 g sodium/l.

### EXPERIMENTAL

The process of the invention has been demonstrated by washing out bottom ash in laboratory scale with the addition of alkali carbonate as an additive.

The laboratory tests have been carried out using samples of waste incineration bottom ash from Måbjerg and Horsens combined heat and power plants. The bottom ash has been dried and diminished to less than 4 mm with a hammer after removing metal parts.

The experiments have been carried out in a 500 ml beaker equipped with magnetic stirrer, pH-meter and conductivity meter. A sample of 20 g bottom ash (dry matter) is suspended in 400 ml deionized water with the addition of 2500 mg/l potassium carbonate, corresponding to a ratio of liquid to solid (L/S) = 20, a potassium concentration of 1415 mg/l and a carbonate concentration of 1085 mg/l which equals to a stoichiometric molar ratio for carbonate/sulphate of about 3. The slurry is stirred in 60 minutes. The results are given in table 1. The high potassium concentration is primarily due to added potassium carbonate.

For comparison, corresponding experiments have been carried out without the addition of potassium carbonate as well as experiments in which 4 g bottom ash instead of 20 g is suspended in deionized water, corresponding to a ratio of liquid to solid (L/S) = 100. The results are given in table 2.

**Table 1. Dissolved salts after 60 minutes by washing bottom ash with a solution of potassium carbonate**

| Sample | L/S | pH | Chloride | Sulphate | Sodium | Potassium | Calcium |
|---|---|---|---|---|---|---|---|
| | l/kg | | mg/kg | mg/kg | mg/kg | mg/kg | mg/kg |
| Måbjerg | 20 | 12.0 | 3980 | 12380 | 4280 | (32920) | 640 |
| Horsens | 20 | 11.9 | 4680 | 11880 | 4080 | (34620) | 170 |

**Table 2 (for comparison). Dissolved salts after 60 minutes by washing bottom ash with deionized water**

| Sample | L/S | pH | Chloride | Sulphate | Sodium | Potassium | Calcium |
|---|---|---|---|---|---|---|---|
| | l/kg | | mg/kg | mg/kg | mg/kg | mg/kg | mg/kg |
| Måbjerg | 20 | 11.3 | 3760 | 6000 | 4440 | 3280 | 3080 |
| Måbjerg | 20 | 11.4 | 3700 | 6080 | 4080 | 3060 | 2080 |
| Måbjerg | 100 | 11.1 | 2400 | 7500 | 2500 | 1900 | 7500 |
| Horsens | 20 | 10.9 | 4320 | 3940 | 3620 | 1950 | 1884 |
| Horsens | 100 | 10.9 | 4750 | 5850 | 4110 | 2150 | 4520 |

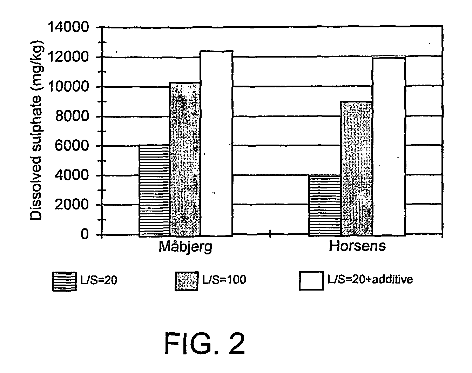

In figure 2, the amount of dissolved sulphate under different washing conditions is compared.

As it appears from the data, the addition of a carbonate improves the washing process effectively, and is yet more effective than the maximum possible washing out with water alone, represented by the experiments with L/S = 100.

On the basis of this invention, a person skilled in the art will be able to carry out the necessary experiments to determine the optimal stoichiometric molar ratio of carbonate to sulphate and the water consumption.

## Claims

1. A process for the releasing of sulphates from bottom ash from waste incineration plants, **characterized by** washing said bottom ash in water with the addition of a soluble hydrogen carbonate.

2. Use of a soluble hydrogen carbonate for the addition to washing water for releasing sulphates from bottom ash from waste incineration plants.

## Patentansprüche

1. Verfahren zum Freisetzen von Sulfaten aus Bodenasche aus Müllverbrennungsanlagen, **gekennzeichnet durch** Waschen der Bodenasche in Wasser unter der Zugabe eines löslichen Hydrogencarbonats.

2. Verwendung eines löslichen Hydrogencarbonats als Zusatz zu Waschwasser für die Freisetzung von Sulfaten aus Bodenasche aus Müllverbrennungsanlagen.

## Revendications

1. Procédé pour la libération des sulfates de cendres de fond d'usines d'incinération des déchets, **caractérisé par** le lavage desdites cendres de fond dans l'eau avec addition d'un hydrogénocarbonate soluble.

2. Utilisation d'un hydrogénocarbonate soluble pour l'addition à de l'eau de lavage pour libérer les sulfates de cendres de fond d'usines de traitement des déchets.
